# EUROPÄISCHE PATENTSCHRIFT

(11) **EP 3 169 270 B1**
(45) Veröffentlichungstag und Bekanntmachung des Hinweises auf die Patenterteilung: **07.06.2023**
(21) Anmeldenummer: 15738067.6
(22) Anmeldetag: 13.07.2015
(51) Int. Cl.: A61C 13/00, A61C 13/107, A61C 19/045

(54) **DENTALPROTHESE ZUR BESTIMMUNG VON ABRASIONSFACETTEN**
DENTAL PROSTHESIS FOR THE DETERMINATION OF WEAR FACETS
PROTHÈSE DENTAIRE POUR LA DÉTERMINATION DE FACETTES D'ABRASION

(30) Priorität: 18.07.2014 DE 102014110154
(43) Veröffentlichungstag der Anmeldung: 24.05.2017
(73) Patentinhaber: Kulzer GmbH, 63450 Hanau (DE)
(72) Erfinder: BÖHM, Uwe, 61350 Bad Homburg (DE); FUNK, Matthias, 63456 Hanau (DE)
(74) Vertreter: Schultheiss & Sterzel Patentanwälte PartG mbB
(86) Internationale Anmeldenummer: PCT/EP2015/065997
(87) Internationale Veröffentlichungsnummer: WO 2016/008857

(56) Entgegenhaltungen:
- EP-A2- 0 497 157
- WO-A1-2013/123062
- DE-C- 950 958
- JP-A- 2012 217 622
- US-A- 4 396 377
- US-A- 5 911 576
- US-A1- 2005 112 523
- US-A1- 2013 073 265
- US-B2- 7 412 298

## Beschreibung

Die Erfindung betrifft eine temporäre Dentalprothese zur Bestimmung von Abrasionsfacetten. Die Erfindung betrifft auch ein Verfahren zur Bestimmung der Kaubewegung eines Gebisses aus gemessenen Abrasionsfacetten und ein Verfahren zur Herstellung einer endgültigen Dentalprothese.

Der gängige Weg ist die analoge Erstellung von Dentalprothesen. Zur Herstellung der Prothesenbasis wird dazu derzeit also meist ein analoges Verfahren verwendet, bei dem zunächst ein Abdruck des zahnlosen Kiefers des Patienten genommen wird. Aus diesem Abdruck wird eine Form gefertigt, die mit einem zahnfleischfarbenen Kunststoff ausgegossen wird. Nach Aushärtung des Kunststoffs wird dieser nachbearbeitet, um die gewünschte Form zu erhalten. Anschließend werden die Prothesenzähne in die Hohlform eingesetzt und während des Gießprozesses mit der Prothesenbasis verbunden.

Zur Herstellung der Dentalprothese werden Prothesenzähne manuell und einzeln auf einer Wachsbasis auf einem Gipsmodell des unbezahnten Kiefers aufgestellt. Diese Wachsprothese wird im nächsten Schritt in einer Küvette mit Gips, Silikon oder Gel (je nach späterer Verarbeitungstechnik) eingebettet, um dann nach Aushärten des Einbettmaterials die Wachsbasis mit heißem Wasser herauszuwaschen und einen Hohlraum für den Prothesenkunststoff zu schaffen. Die Prothesenzähne verbleiben dabei im Einbettmaterial. Ein entsprechender Kunststoff wird in den Hohlraum injiziert oder gegossen, dadurch erhält man nach Aushärtung des Kunststoffs die Dentalprothese. Bei der Aufstellung der konfektionierten Zähne werden diese der jeweiligen Mundsituation des Patienten vom Zahntechniker und gegebenenfalls auch vom Zahnarzt angepasst und beschliffen.

Ein Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird. Aus der EP 0 497 157 A2 ist die Herstellung vernetzter Dentalformkörper bekannt, die als Prothesenzähne oder Zahnteilprothesen verwendet werden können. Die US 4 396 377 A offenbart ein härtbares Material zur Herstellung von Prothesenzähnen. Es gibt bereits erste Verfahren, wie beispielsweise die aus der DE 10 2009 056 752 A1 oder der WO 2013 124 452 A1 bekannten Verfahren, bei denen eine dentale Teilbeziehungsweise Totalprothese digital aufgestellt und über CAD-CAM-Verfahren produziert wird. Die JP 2012-217 622 A offenbart ein Verfahren zur Herstellung eines zu ersetzenden Okklusionsflächenabschnitts an einem künstlichen Backen- oder Mahlzahn. Bei dem Verfahren wird ein benutzter und nach der Benutzung abgenommener koronaler Teil mit den Abrasionsfacetten abgeformt, um damit einen endgültigen koronalen Teil einer Krone aus einem abriebfesten Material herzustellen und diesen bei einer endgültigen Dentalprothese einzusetzen. Optimierte Verfahren zur Herstellung von Dentalprothesen mit CAD-CAM-Verfahren sind zudem aus der EP 1 444 965 A2 bekannt.

Nachteilig ist an den bekannten Verfahren, dass die Prothesenzähne wenn sie in der Prothesenbasis eingesetzt sind, häufig nochmals am Patienten korrigiert werden müssen. Dazu müssen die Prothesenzähne entweder okklusal beschliffen werden oder die Prothesenzähne werden aus der Prothesenbasis entfernt, basal geschliffen und anschließend wieder eingesetzt. Die Okklusionsfunktion der Dentalprothese wird meist manuell gemessen, indem ein gefärbtes Blättchen eingesetzt wird, auf dem der Patient dann bei geschlossenem Kiefer Kaubewegungen durchführen soll. Die Bereiche starker Reibung und hohen Drucks aufeinander verfärben sich und werden anschließend vom Zahnarzt abgeschliffen. Es gibt hier auch bereits fortschrittlichere Verfahren bei denen die Kaubewegung mit Hilfe von Artikulatoren bestimmt wird. Solche Verfahren haben den Nachteil, dass sie die natürliche Kaubewegung des Patienten häufig nur unvollständig bestimmen können. Zudem muss, um die Form und das Erscheinungsbild der Prothesenzähne nicht nachteilig zu beeinflussen, ein gewisser Aufwand durch den Zahnarzt beim okklusalen Einschleifen der Prothesenzähne betrieben werden.

Die Aufgabe der Erfindung besteht also darin, die Nachteile des Stands der Technik zu überwinden. Insbesondere soll eine Möglichkeit gefunden werden, die Kaubewegungen eines Patienten möglichst bei der normalen Anwendung einer Dentalprothese zu bestimmen, um damit eine Verbesserung bei der Herstellung einer endgültigen Dentalprothese zu ermöglichen. Gleichzeitig soll ein dabei angewendetes Verfahren möglichst leicht umzusetzen sein und vorzugsweise automatisiert oder automatisierbar sein. Die Bestimmung der Kieferbewegung soll dabei möglichst auf die herzustellende endgültige Dentalprothese bezogen sein. Gleichzeitig darf das Verfahren aber nicht zu aufwendig sein.

Die Aufgaben der Erfindung werden gelöst durch eine temporäre Dentalprothese zur Bestimmung von Abrasionsfacetten aufweisend eine Prothesenbasis und wenigstens einen Prothesenzahn, bei der zumindest die Okklusionsfläche des Prothesenzahns oder zumindest einer der Prothesenzähne aus einem abriebfähigen Material gefertigt ist, wobei das abriebfähige Material ein Plexiglas, ein unvernetztes Polymethylmethacrylat und/oder einen ungefüllten, nicht quervernetzten Thermoplast aufweist, und wobei das abriebfähige Material derart beschaffen ist, dass auf einer ebenen Oberfläche des abriebfähigen Materials bei einer Zwei-Medien-Abrasion gegen eine Aluminiumoxidkugel mit 4,75 mm Durchmesser unter Wasser nach 4.600 Zyklen ein Volumenverlust von 0,1 mm³ bis 2 mm³ entsteht, wobei bei jedem Zyklus die Aluminiumoxidkugel auf die Oberfläche aufgesetzt, anschließend mit einer Kraft von 50 N um 0,8 mm auf der ebenen Oberfläche des Materials abgerollt und daran anschließend wieder von der Oberfläche abgehoben wird.

Bei der Ermittlung oder Bestimmung der Kaubewegung des Kiefers eines Patienten werden die Abrasionsfacetten bezüglich deren Lage und Tiefe vermessen, gegebenenfalls auch bezüglich deren Form vermessen, und aus den so gewonnenen Daten wird auf die Kaufunktion beziehungsweise die Kaubewegung des Kiefers rückgerechnet.

Dabei kann vorgesehen sein, dass an zumindest einer der innerhalb von maximal 12 Wochen auftretenden Abrasionsfacetten eine Materialstärke von zumindest 0,1 mm abgetragen ist, insbesondere eine Materialstärke von zumindest 0,5 mm abgetragen ist, wobei bevorzugt die Abrasionsfacetten durch normalen Gebrauch der Dentalprothese von maximal 12 Wochen auftreten, besonders bevorzugt von maximal 4 Wochen auftreten, ganz besonders bevorzugt von maximal 2 Tagen auftreten.

Hierdurch wird sichergestellt, dass die Abrasionsfacetten ausreichend stark sind, um eine hinreichend genaue Ermittlung der Kaubewegungen anhand der vermessenen Abrasionsfacetten zu ermöglichen.

Die Abriebfähigkeit des Materials ist für den Aufbau erfindungsgemäßer temporärer Dentalprothesen besonders gut geeignet, da die Spannweite der Abrasion der temporären Dentalprothese, bei normalem Gebrauch der temporären Dentalprothese durch unterschiedliche Patienten, geeignet ist, um die im Gebrauch der temporären Dentalprothesen entstehenden Abrasionsfacetten zu einer Bestimmung der Kaufunktion der Kiefer der Patienten in ausreichender Qualität zu nutzen. Die Qualität der Abrasionsfacetten ist dann ausreichend, wenn die Kaufunktion derart genau bestimmt wird, dass die mit den so gewonnen Daten zur Kaufunktion erzeugte endgültige Prothese bezüglich der Okklusion derart genau einstellbar ist, dass die endgültige Prothese beim Patienten passt, bevorzugt eine weitere Nachbearbeitung der Okklusionsflächen durch eine Anpassung am Patienten durch den Zahnarzt oder einen Zahntechniker nicht mehr notwendig ist. Dies kann auf herkömmlichen Weg geprüft werden, wie dies bei der Okklusionsprüfung beim Zahnarzt üblich ist.

Es kann des Weiteren vorgesehen sein, dass die beschriebenen Volumenverluste durch die Zwei-Medien-Abrasion in einem Kausimulator CS-4.2 oder CS-4.4 der Firma SD Mechatronik GmbH erfolgen.

Dieser Aufbau ist zum Standardisieren der Abrasion und damit zum Standardisieren und Definieren der Eigenschaften des abriebfähigen Materials besonders gut geeignet.

Mit einer Weiterentwicklung kann auch vorgesehen sein, dass die temporäre Dentalprothese mit einem Rapid-Prototyping-Verfahren oder mittels einem abtragendem Verfahren hergestellt ist, bevorzugt mit Fused Layer Modeling/Manufacturing (FLM) von Kunststoffen oder Wachsen, Fused Deposition Modeling (FDM) von Kunststoffen oder Wachsen, insbesondere von Acrylnitril-Butadien-Styrol-Copolymerisat oder Polylactid, Laminated Object Modelling (LOM) von Kunststofffolien, Layer Laminated Manufacturing (LLM) von Kunststofffolien, Elektronenstrahlschmelzen (EBM) von Kunststoffen oder Wachsen, Multi Jet Modeling (MJM) von Wachsen oder Kunststoffen, insbesondere von Thermoplasten oder UV-empfindlichen Photopolymeren, Polyamidguss von Polyamiden, Selektives Laserschmelzen (SLM) von Kunststoffen, Selektives Lasersintern (SLS) von Kunststoffen oder Wachsen, insbesondere von Thermoplasten wie Polycarbonate, Polyamide oder Polyvinylchlorid, 3-D-Printing (3DP) von Kunststoffgranulat oder Kunststoffpulver, Space Puzzle Molding (SPM) von Kunststoffen oder Wachsen, Stereolithografie (STL oder SLA) von Kunststoffen oder Wachsen, Schleifen oder Mehr-Achs-Fräsverfahren, insbesondere von einem flüssigen Harz, Duromer oder Elastomer oder Digital Light Processing (DLP) von photopolymerisierbaren flüssigen Kunststoffen.

Mit diesen Verfahren können die temporären Dentalprothesen leicht und vollautomatisch gefertigt werden. Insbesondere bei der Anwendung von modernen CAD-CAM-Verfahren lassen sich die ohnehin benötigten Daten leicht auch zur Fertigung der temporären Dentalprothese nutzen.

Für die Anwendung am Patienten ist es erforderlich, dass das abriebfähige Material biokompatibel ist.

Dadurch wird sichergestellt, dass die beim Abrieb entstehenden Partikel den Patienten nicht beeinträchtigen.

Es kann vorgesehen sein, dass die Okklusionsfläche oder die Okklusionsflächen, das koronale Ende oder die koronalen Enden, die Prothesenzähne oder Prothesenzahnreihen, die Oberkiefer-Dentalprothese, oder Unterkiefer-Dentalprothese, oder die gesamte temporäre Dentalprothese aus dem abriebfähigen Material gefertigt sind.

Die Bezeichnung "koronal" (lat. corona 'Krone') bedeutet an der Zahnkrone und zur Zahnkrone hin als Lage- und Richtungsbezeichnung an den Zähnen, umfassend die okklusale Oberfläche und die die okklusale Oberfläche umgebenden Umfangsbereiche der Zähne beziehungsweise der Prothesenzähne.

Diese Teile reichen zur Umsetzung eines erfindungsgemäßen Verfahrens aus, bei dem gezielt die Kaufunktion des Kiefers der Patienten mit Hilfe der temporären Dentalprothese bestimmt wird. Um einen bequemen Sitz der temporären Dentalprothese zu ermöglichen, kann es vorteilhaft sein, wenn die Prothesenbasis der temporären Dentalprothese aus einem anderen Material als dem abriebfähigen Material gefertigt ist. Eine besonders kostengünstige temporäre Dentalprothese erhält man, wenn die ganze temporäre Dentalprothese aus dem abriebfähigen Material gefertigt ist.

Gemäß einer besonders bevorzugten Weiterentwicklung der Erfindung wird vorgeschlagen, dass die in Okklusion befindlichen Okklusionsflächen der Prothesenzähne jeweils aus dem abriebfähigen Material gepaart mit einem anderen abriebfesteren Material bestehen, wobei insbesondere das abriebfestere Material härter als das erste Material ist, wobei bevorzugt die Prothesenzähne des Oberkiefers oder die Prothesenzähne des Unterkiefers aus dem abriebfähigen Material gefertigt sind.

Hierdurch können die Abrasionsfacetten gezielt an bestimmten Prothesenzähnen, beispielsweise an den Okklusionsflächen der Prothesenzähne des Oberkiefers oder des Unterkiefers erzeugt werden. Dies ist zur Bestimmung der Kaubewegung besonders vorteilhaft, da so eine gegenseitige Beeinflussung der während des Gebrauchs der temporären Dentalprothese entstehenden Abrasionsfacetten ausgeschlossen und somit bei der Bestimmung der Kaubewegung nicht mehr berücksichtigt werden muss.

Erfindungsgemäß ist vorgesehen, dass das abriebfähige Material ein Plexiglas, ein unvernetztes Polymethylmethacrylat und/oder einen ungefüllten, nicht quervernetzten Thermoplast aufweist, bevorzugt das abriebfähige Material ein Plexiglas, ein unvernetztes Polymethylmethacrylat oder ein ungefüllter, nicht quervernetzter Thermoplast ist.

Diese Materialien können gut mit den gewünschten physikalischen Eigenschaften erzeugt werden, so dass sich die gewünschte Abriebfähigkeit ergibt. Durch eine reduzierte Vernetzung wird das Material in seinen strukturellen Zusammenhalt derart geschwächt, dass bei einer mechanischen Belastung leichter Partikel aus dem Material gelöst werden können und sich so eine erhöhte Abtragungsrate ergibt.

Weiterhin ist offenbart ein Verfahren zur Bestimmung der Kaubewegung eines Gebisses aus gemessenen Abrasionsfacetten, bei dem eine temporäre Dentalprothese aus einem abriebfähigen Material, bevorzugt eine erfindungsgemäße Dentalprothese, nach maximal 12 Wochen Benutzung der temporären Dentalprothese, bevorzugt nach maximal 4 Wochen Benutzung der temporären Dentalprothese, die Abrasionsfacetten an der Dentalprothese gemessen werden und aus den gemessenen Abrasionsfacetten die Kaubewegungen des Gebisses des Patienten berechnet werden.

Die Kaubewegungen werden bevorzugt dynamisch ermittelt.

Bei solchen Verfahren kann vorgesehen sein, dass die temporäre Dentalprothese mittels eines RP-Verfahrens oder mittels eines abtragenden Verfahrens hergestellt wird.

Des Weiteren kann auch vorgesehen sein, dass vor der Herstellung der temporären Dentalprothese die Zentrik bestimmt wird.

Bei einer Bestimmung der Zentrik eines Kiefers wird die Lage des Oberkiefers und des Unterkiefers zueinander mit Zähnen und/oder einer passenden Dentalprothese im zusammengepressten (zusammengebissenen) Zustand des Kiefers am Patienten bestimmt.

Hierdurch kann sichergestellt werden, dass die erzeugte temporäre Dentalprothese bezüglich der Okklusion derart gut voreingestellt ist, dass die Abrasionsfacetten nicht durch eine, von einer fehlerhaften Okklusion des Kiefers verfälschten Kaubewegung beeinflusst werden.

Mit einer bevorzugten Weiterbildung des Verfahrens wird auch vorgeschlagen, dass die Abrasionsfacetten der gebrauchten temporären Dentalprothese mit einem Scanner gemessen werden, die Lage, Tiefe und/oder Form der Abrasionsfacetten mit einem Computer bestimmt wird, bevorzugt durch einen Vergleich einer Aufnahme der ungebrauchten temporären Dentalprothese oder eines CAD-Modells der ungebrauchten temporären Dentalprothese, auf dessen Basis die temporäre Dentalprothese hergestellt wurde, mit der gebrauchten temporären Dentalprothese, und die Kaubewegung des Kiefers aus den so gewonnenen Daten zu den Abrasionsfacetten berechnet wird. Die Abrasionsfacetten können durch eine intraorale Aufnahme oder die Aufnahme des zahntechnischen Modells beziehungsweise der benutzten temporären Dentalprothese mittels Tischscanner ermittelt werden. Hierdurch lässt sich das Verfahren automatisieren, so dass das gesamte Verfahren mit Hilfe eines geeigneten Computerprogramms durchführbar ist.

Weiterhin offenbart ist ein Verfahren zur Herstellung einer endgültigen Dentalprothese, bei dem das oben beschriebene Verfahren zur Bestimmung der Kaubewegung eines Gebisses aus Abrasionsfacetten angewendet wird und bei dem basierend auf den mit der temporären Dentalprothese ermittelten Daten zu den Kaubewegungen des Kiefers des Patienten die Lage und Orientierung der Prothesenzähne der endgültigen Dentalprothese berechnet wird und die endgültige Dentalprothese auf Basis dieser Berechnung hergestellt wird, insbesondere mit einem CAD-CAM-Verfahren.

Der Erfindung liegt die überraschende Erkenntnis zugrunde, dass es durch die Verwendung einer leicht abradierenden beziehungsweise einer abriebfähigen temporären Dentalprothese gelingt, in kurzer Zeit bei den natürlichen Bewegungen des Kiefers beziehungsweise bei einer normalen Anwendung durch den Patienten Abrasionsfacetten in der temporären Dentalprothese entstehen zu lassen, die zur Bestimmung beziehungsweise zur Ermittlung der natürlichen Kaubewegungen des Kiefers des Patienten geeignet sind. Aus der Lage, Tiefe und Form der Abrasionsfacetten lassen sich dann sehr gute Rückschlüsse auf die Kaubewegungen des Kiefers schließen, die dann zur Optimierung des Aufbaus der endgültigen Dentalprothese geeignet sind. Mit der Erfindung werden ein Verfahren und ein Material zur Herstellung von funktional optimierten temporären Dentalprothesen bereitgestellt.

Die der vorliegenden Erfindung zugrunde liegende Idee kann darin gesehen werden, dass, nachdem die Zentrik mit bekannten Verfahren bestimmt ist, eine kostengünstige temporäre Dentalprothese auf herkömmlichen Weg oder mittels RP-Verfahren oder mittels abtragender Verfahren (wie beispielsweise automatisches Schleifen oder Fräsen) erstellt wird. Die verwendeten Materialien sind biokompatibel. Mindestens bei einem Teil der temporären Dentalprothese, das heißt bei der temporären Dentalprothese für den Oberkiefer oder den Unterkiefer, sind die künstlichen Prothesenzähne oder zumindest deren okklusalen Flächen aus einem sehr abriebfähigen Material hergestellt, so dass es nach kurzer Tragedauer (bevorzugt Stunden bis Tage) zu Abrasionsfacetten kommt. Die so hergestellte temporäre Dentalprothese dient ausschließlich dazu, um möglichst schnell bei einem zahnlosen Kiefer aus der Kaubewegung die funktional optimalen Prothesenzähne zu konstruieren.

Die nachfolgend gemessene Abrasion wird zum Beispiel mit einer geeigneten Software analysiert. Hierdurch soll ermöglicht werden, eine funktional optimierte Dentalprothese zu konstruieren und mit bekannten Verfahren als endgültige Dentalprothese umzusetzen beziehungsweise herzustellen.

Um die Abriebfähigkeit des zu verwendeten Materials zu bestimmen und damit die Eignung des abriebfähigen Materials für eine erfindungsgemäße temporäre Dentalprothese feststellen zu können, kann beispielsweise und erfindungsgemäß bevorzugt eine Zwei-Medien-Abrasion (eine Kausimulation) durchgeführt werden. Eine solche Methode läuft dabei beispielsweise wie folgt ab:
- Herstellung der Prüfkörper aus dem gewünschtem beziehungsweise in Frage kommenden abriebfähigen Material und Herstellung oder Bereitstellung der Antagonisten (Aluminiumoxidkugeln, 4,75 mm Durchmesser) in vorgefertigten REM-Trägern (9 mm Durchmesser)
- Polymerisation der Prüfkörper nach Herstellerangaben
- Die Proben werden zuerst mit 1000er und dann mit 4000er SiC-Papier nass geschliffen
- Danach werden die Proben einer thermischen Wechselbelastung durch Anwendung der folgenden Zyklen ausgesetzt, die jeweils 5000 mal wiederholt werden:
   1. 30 Sekunden Eintauchen in kaltes Wasser bei 5° C;
   2. 10 Sekunden abtropfen lassen;
   3. 30 Sekunden Eintauchen in warmes Wasser bei 55° C; und
   4. 10 Sekunden abtropfen lassen.
- Nach Beendigung der thermischen Belastung beziehungsweise der 5000 Zyklen zur thermischen Belastung werden die Prüfkörper und die Antagonisten in einen Kausimulator gesetzt (dabei befinden sich die Prüfkörper ständig unter Wasser). Bei der eigentlichen Prozedur zum Abrieb werden 4.600 der folgenden Zyklen durchgeführt:
   1. Aufsetzen des Antagonisten auf die Probe mit einer Kraft von 50 N;
   2. Horizontale Bewegung der Probe unter dieser Last um 0,8 mm; und
   3. Abheben des Antagonisten von der Probe.
- Durch diesen Bewegungsablauf entsteht auf der Probe eine deutlich sichtbare runde bis leicht ovale Vertiefung.

Die Auswertung der Ergebnisse beziehungsweise der Abrasionsvertiefungen kann beispielsweise wie folgt erfolgen:
Die Auswertung der entstandenen Vertiefungen erfolgt mit einem berührungslosen Oberflächen-Laserscanner (Microfocus-System).

Eine Fläche von 2,5 mm mal 2,5 mm (je nach Größe des Abdrucks auch 3 mal 3 mm²) wird vermessen. Dabei ist zu beachten, dass die zu vermessende Vertiefung mittig in Bezug auf die Gesamtmessfläche ist (der Rand um die Vertiefung herum kann von einer Software zur Ausrichtung des Prüfkörpers verwendet beziehungsweise benötigt werden).

Der Laser ermittelt die Oberflächenbeschaffenheit der abradierten Fläche beziehungsweise Vertiefung. Dabei werden die maximale Tiefe jeder Vertiefung in µm und der Volumenverlust in mm³ bestimmt.

Als Kausimulator kann beispielsweise ein CS-4.2 oder ein CS-4.4 der Firma SD Mechatronik GmbH (früher: Willytec GmbH) verwendet werden. Als Versuchsparameter können dabei die folgenden Parameter verwendet werden: Hubhöhe 5,0 mm, Hubtiefe 0,8 mm, Absenkgeschwindigkeit 20 mm/s, Hubgeschwindigkeit 50 mm/s, Vorgeschwindigkeit 30 mm/s, Rückgeschwindigkeit 50 mm/s, Belastung der Probe 50 N. Als Antagonisten können Al₂O₃-Kugeln mit einem Durchmesser von 4,75 mm verwendet werden.

Ein geeigneter Oberflächenscanner kann von der Firma OPM GmbH bezogen werden. Als Messparameter können dabei gewählt werden: Messfläche 2,5 × 2,5 mm² (bei Bedarf 3 × 3 mm²), Auflösung 100 Pixel / mm und Auflösung z-Achse 0,1 µm.

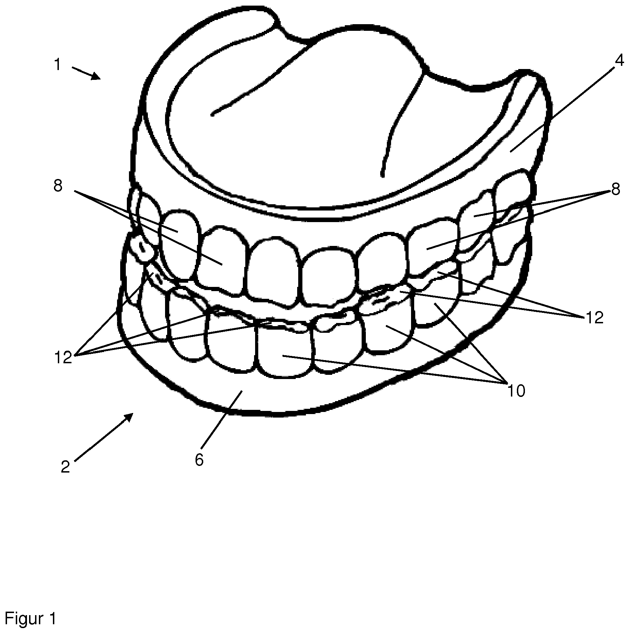

Im Folgenden werden weitere Ausführungsbeispiele der Erfindung anhand einer schematisch dargestellten Figur erläutert, ohne jedoch dabei die Erfindung zu beschränken. Die Figur 1 zeigt eine schematische Darstellung einer erfindungsgemäßen temporären Dentalprothese.

Die dargestellte temporäre Dentalprothese ist eine zweiteilige Totalprothese, die als Hilfsmittel zum Erzeugen einer endgültigen Dentalprothese zur Versorgung eines vollständig zahnlosen Kiefers verwendet wird. Die zweiteilige Dentalprothese besteht aus einer Oberkiefer-Dentalprothese 1 und einer Unterkiefer-Dentalprothese 2. Die Oberkiefer-Dentalprothese 1 weist eine Prothesenbasis 4 auf. Die Unterkiefer-Dentalprothese 2 weist ebenfalls eine Prothesenbasis 6 auf.

Die Prothesenbasen 4, 6 liegen beim Patienten auf dem zahnlosen Kiefersattel auf. In den Prothesenbasen 4, 6 ist eine Zahnreihe von Prothesenzähnen 8 für den Oberkiefer und eine Zahnreihe von Prothesenzähnen 10 für den Unterkiefer angeordnet. Die Zahnreihe der Prothesenzähne 8 des Oberkiefers bildet eine Okklusionsebene mit den Prothesenzähnen 10 des Unterkiefers. Die passende Okklusionsebene wurde mit bekannten Verfahren zur Bestimmung der Zentrik bestimmt.

Bei der perspektivischen Ansicht nach Figur 1 sind nur Okklusionsflächen 12 der Prothesenzähne 10 der Unterkiefer-Dentalprothese 6 zu erkennen. Die Prothesenzähne 8 der Oberkiefer-Dentalprothese 4 weisen korrespondierende Okklusionsflächen auf, die in Figur 1 aufgrund der Perspektive jedoch nicht zu sehen sind. Die Okklusionsflächen der Prothesenzähne 8 der Oberkiefer-Dentalprothese 4 liegen im zusammengepressten (zusammengebissenen) Zustand an den Okklusionsflächen 12 der Prothesenzähne 10 der Unterkiefer-Dentalprothese 6 an.

Die Okklusionsflächen 12 der Prothesenzähne 10 der Unterkiefer-Dentalprothese 6 bestehen aus einem (leicht) abriebfähigen Material, das heißt aus einem Material das deutlich leichter abriebfähig ist als herkömmliche gebräuchliche Materialien zum Aufbau von Prothesenzähnen. Das bedeutet, dass das abriebfähige Material wenigstens doppelt so schnell abgerieben wird wie herkömmliche gebräuchliche Materialien zum Aufbau von Prothesenzähnen, bevorzugt wenigstens zehn mal so schnell abgerieben wird wie herkömmliche gebräuchliche Materialien zum Aufbau von Prothesenzähnen.

Die korrespondierenden Okklusionsflächen der Prothesenzähne 8 der Oberkiefer-Dentalprothese 4 bestehen bevorzugt aus einem herkömmlichen gebräuchlichen Materialien zum Aufbau von Prothesenzähnen, also aus einem abriebfesteren Material. Alternativ können die Okklusionsflächen der Prothesenzähne 8 der Oberkiefer-Dentalprothese 4 aber auch aus dem gleichen abriebfähigen Material bestehen wie die Okklusionsflächen 12 der Prothesenzähne 10 der Unterkiefer-Dentalprothese 6. Die Dicke des abriebfähigen Materials beträgt bevorzugt zwischen 0,1 mm und 5 mm, wobei die Dicke des abriebfähigen Materials auf die Abriebfähigkeit des korrespondierenden Materials angepasst werden kann und/oder an die Belastung durch den Patienten angepasst werden kann. Beispielsweise kann bei älteren Personen mit schwachem Biss oder bei bekannten, zum Beispiel entzündlichen Problemen der Auflageflächen beziehungsweise der Zahnsättel ein abrasionsfähigeres, das heißt ein leichter beziehungsweise schneller abreibbares Material gewählt werden. Alternativ können aber auch die gesamten Prothesenzähne 10 oder die gesamten Prothesenzähne 8, 10 oder auch die gesamte Unterkiefer-Dentalprothese 2 und / oder die gesamte Oberkiefer-Dentalprothese 1 aus dem abriebfähigen Material bestehen.

Bei dem Gebrauch der Dentalprothese 1, 2 reiben und malmen die Okklusionsflächen 12 bereichsweise aufeinander. Dabei wird das abriebfähige Material der Okklusionsflächen 12 mit der Zeit abgerieben beziehungsweise entfernt beziehungsweise bereichsweise geometrisch reduziert. Die so entstehenden abgeriebenen Bereiche werden als Abrasionsfacetten bezeichnet. Die Häufigkeit und Stärke der Kaubewegungen bestimmt auf längere Sicht (einige Stunden bis einige Wochen - je nach Abriebfähigkeit des Materials) die Position, Form und Tiefe der Abrasionsfacetten sowie die abgetragenen Volumina der Abrasionsfacetten. Die Abrasionsfacetten sind nicht gleichmäßig verteilt, da die Prothesenzähne 8, 10 nicht an allen Okklusionsflächen 12 bei den vollführten Kaubewegungen aufeinander treffen und auch nicht gleich häufig und mit gleichem Druck und über gleiche Längen übereinander gleiten beziehungsweise reiben. Daher sind die Abrasionsfacetten für die Kaubewegungen des Patienten charakteristisch.

Durch das leicht abzutragende abriebfähige Material wird erreicht, dass die Abrasionsfacetten viel schneller als bei endgültigen Dentalprothesen üblich und gewünscht auftreten. Nach einer Gebrauchsdauer von einigen Stunden gezielter Kaubewegungen bis zu einigen Wochen normalen Gebrauchs der temporären Dentalprothese kann diese entnommen werden.

Theoretisch kann die Abriebfähigkeit des abriebfähigen Materials auch so gewählt werden, dass die Abrasionsfacetten bereits nach einigen wenigen Kaubewegungen auftreten. Hierzu kann es sinnvoll sein, dass der Patient dabei einige male den Mund ausspült, um das abgetragene Material aus dem Mundraum zu entfernen. Die temporäre Dentalprothese ersetzt dann die Höhenprüfung mit den bekannten gefärbten Plättchen, bei denen der Zahnarzt an der Färbung auf den endgültigen Prothesen die bei der Kaubewegung störenden Bereiche erkennt und abschleifen kann.

Die Abrasionsfacetten werden mit Hilfe eines Scanners im Mundraum des Patienten oder bevorzugt extern bestimmt. Die Form, Lage und/oder Tiefe der Abrasionsfacetten wird rechnerisch ausgewertet, um auf die typischen Kaubewegungen des Kiefers des Patienten zurückzuschließen beziehungsweise rückzurechnen. Die ursprüngliche Form der temporären Dentalprothese kann dabei rechnerisch berücksichtigt werden, indem die äußere Form der gebrauchten temporären Dentalprothese von der äußeren Form der neuen temporären Dentalprothese abgezogen wird. Theoretisch reicht es aus, nur die äußere Form der koronalen Bereiche oder nur die äußere Form der Okklusionsflächen der Prothesenzähne voneinander zu subtrahieren. Hierzu sollten unveränderte Fixpunkte erkennbar sein oder definiert werden. Die äußere Form der neuen temporären Dentalprothese ist insbesondere dann gut bekannt, wenn diese mit einem CAD-CAM-Verfahren gefertigt wurde und also das CAD-Modell der äußeren Fläche der temporären Dentalprothese bekannt und schon gespeichert ist. Daher sind derartig gefertigte temporäre Dentalprothesen erfindungsgemäß bevorzugt.

Die derart ermittelten Kaubewegungen können verwendet werden, um eine zu der Kaubewegung passende endgültige Dentalprothese für den Patienten zu fertigen.

### Bezugszeichenliste

- 1: Oberkiefer-Dentalprothese
- 2: Unterkiefer-Dentalprothese
- 4: Prothesenbasis Oberkiefer
- 6: Prothesenbasis Unterkiefer
- 8: Prothesenzahn Oberkiefer
- 10: Prothesenzahn Unterkiefer
- 12: Okklusionsfläche

## Patentansprüche

1. Temporäre Dentalprothese zur Bestimmung von Abrasionsfacetten aufweisend eine Prothesenbasis (4, 6) und wenigstens einen Prothesenzahn (8, 10), bei der
zumindest die Okklusionsfläche (12) des Prothesenzahns (8, 10) oder zumindest einer der Prothesenzähne (8, 10) aus einem abriebfähigen Material gefertigt ist, **dadurch gekennzeichnet, dass**
das abriebfähige Material ein Plexiglas, ein unvernetztes Polymethylmethacrylat und/oder einen ungefüllten, nicht quervernetzten Thermoplast aufweist, und dass
das abriebfähige Material derart beschaffen ist, dass auf einer ebenen Oberfläche des abriebfähigen Materials bei einer Zwei-Medien-Abrasion gegen eine Aluminiumoxidkugel mit 4,75 mm Durchmesser unter Wasser nach 4.600 Zyklen ein Volumenverlust von 0,1 mm³ bis 2 mm³ entsteht, wobei bei jedem Zyklus die Aluminiumoxidkugel auf die Oberfläche aufgesetzt, anschließend mit einer Kraft von 50 N um 0,8 mm auf der ebenen Oberfläche des Materials abgerollt und daran anschließend wieder von der Oberfläche abgehoben wird.

2. Dentalprothese nach Anspruch 1, **dadurch gekennzeichnet, dass**
die beschriebenen Volumenverluste durch die Zwei-Medien-Abrasion in einem Kausimulator CS-4.2 der Firma SD Mechatronik GmbH erfolgen.

3. Dentalprothese nach einem der vorangehenden Ansprüche, **dadurch gekennzeichnet, dass**
die temporäre Dentalprothese mit einem Rapid-Prototyping-Verfahren oder mit einem abtragenden Verfahren hergestellt ist.

4. Dentalprothese nach einem der vorangehenden Ansprüche, **dadurch gekennzeichnet, dass**
die temporäre Dentalprothese mit einem der folgenden Verfahren hergestellt ist:
Fused Layer Modeling/Manufacturing (FLM) von Kunststoffen oder Wachsen, Fused Deposition Modeling (FDM) von Kunststoffen oder Wachsen, insbesondere von Acrylnitril-Butadien-Styrol-Copolymerisat oder Polylactid, Laminated Object Modelling (LOM) von Kunststofffolien, Layer Laminated Manufacturing (LLM) von Kunststofffolien, Elektronenstrahlschmelzen (EBM) von Kunststoffen oder Wachsen, Multi Jet Modeling (MJM) von Wachsen oder Kunststoffen, insbesondere von Thermoplasten oder UV-empfindlichen Photopolymeren, Polyamidguss von Polyamiden, Selektives Laserschmelzen (SLM) von Kunststoffen, Selektives Lasersintern (SLS) von Kunststoffen oder Wachsen, insbesondere von Thermoplasten wie Polycarbonate, Polyamide oder Polyvinylchlorid, 3-D-Printing (3DP) von Kunststoffgranulat oder Kunststoffpulver, Space Puzzle Molding (SPM) von Kunststoffen oder Wachsen, Stereolithografie (STL oder SLA) von Kunststoffen oder Wachsen, Schleifen oder Mehr-Achs-Fräsverfahren, insbesondere von einem flüssigen Harz, Duromer oder Elastomer oder Digital Light Processing (DLP) von photopolymerisierbaren flüssigen Kunststoffen.

5. Dentalprothese nach einem der vorangehenden Ansprüche, **dadurch gekennzeichnet, dass**
das abriebfähige Material biokompatibel ist.

6. Dentalprothese nach einem der vorangehenden Ansprüche, **dadurch gekennzeichnet, dass**
die Okklusionsfläche (12) oder die Okklusionsflächen (12), das koronale Ende oder die koronalen Enden, die Prothesenzähne (8, 10) oder Prothesenzahnreihen, die Oberkiefer-Dentalprothese (1), oder Unterkiefer-Dentalprothese (2), oder die gesamte temporäre Dentalprothese aus dem abriebfähigen Material gefertigt sind.

7. Dentalprothese nach einem der vorangehenden Ansprüche, **dadurch gekennzeichnet, dass**
die in Okklusion befindlichen Okklusionsflächen (12) der Prothesenzähne (8, 10) jeweils aus dem abriebfähigen Material gepaart mit einem anderen, abriebfesteren Material bestehen.

8. Dentalprothese nach Anspruch 7, **dadurch gekennzeichnet, dass**
das abriebfestere Material härter ist als das erste Material.

9. Dentalprothese nach Anspruch 7 oder 8, **dadurch gekennzeichnet, dass**
die Prothesenzähne (8, 10) des Oberkiefers (1) oder die Prothesenzähne (8, 10) des Unterkiefers (2) aus dem abriebfähigen Material gefertigt sind.

## Claims

1. Temporary dental prosthesis for determining abrasion facets comprising a prosthesis base (4, 6) and at least one prosthesis tooth (8, 10), wherein
at least the occlusal surface (12) of the prosthesis tooth (8, 10) or at least one of the prosthesis teeth (8, 10) is made of an abrasive material, **characterized in that**
the abrasive material comprises a plexiglass, an uncrosslinked polymethyl methacrylate and/or an unfilled, non-crosslinked thermoplastic, and that
the abrasive material is such that a volume loss of 0.1 mm³ to 2 mm³ occurs on a planar surface of the abrasive material upon two-medium abrasion against a 4.75 mm diameter alumina sphere under water after 4,600 cycles, wherein in each cycle the alumina sphere is placed on the surface, then rolled on the planar surface of the abrasive material by 0.8 mm with a force of 50 N, and subsequently lifted off the surface.

2. Dental prosthesis according to claim 1, **characterized in that**
the volume losses described are effected by a two-media abrasion in a chewing simulator CS-4.2 of the company SD Mechatronik GmbH.

3. Dental prosthesis according to one of the preceding claims, **characterized in that** the temporary dental prosthesis is produced by a rapid prototyping process or by a material removing process.

4. Dental prosthesis according to one of the preceding claims, **characterized in that** the temporary dental prosthesis is manufactured by one of the following processes:
Fused Layer Modelling/Manufacturing (FLM) of plastics or waxes, Fused Deposition Modelling (FDM) of plastics or waxes, in particular of acrylonitrile-butadiene-styrene copolymer or polylactide, Laminated Object Modelling (LOM) of plastic films, Layer Laminated Manufacturing (LLM) of plastic films, Electron Beam Melting (EBM) of plastics or waxes, Multi Jet Modelling (MJM) of waxes or plastics, especially of thermoplastics or UV-sensitive photopolymers, Polyamide Casting of polyamides, Selective Laser Melting (SLM) of plastics, Selective Laser Sintering (SLS) of plastics or waxes, especially of thermoplastics such as polycarbonates, polyamides or polyvinyl chloride, 3-D Printing (3DP) of plastic granules or plastic powders, Space Puzzle Molding (SPM) of plastics or waxes, Stereolithography (STL or SLA) of plastics or waxes, Grinding or multi-axis milling process, especially of a liquid resin, duromer or elastomer or Digital Light Processing (DLP) of photopolymerizable liquid plastics.

5. Dental prosthesis according to one of the preceding claims, **characterized in that** the abrasive material is biocompatible.

6. Dental prosthesis according to one of the preceding claims, **characterized in that** the occlusal surface (12) or the occlusal surfaces (12), the coronal end or the coronal ends, the prosthesis teeth (8, 10) or prosthesis tooth rows, the maxillary dental prosthesis (1), or mandibular dental prosthesis (2), or the entire temporary dental prosthesis are made of the abrasive material.

7. Dental prosthesis according to one of the preceding claims, **characterized in that** the occlusal surfaces (12) of the denture teeth (8, 10) in occlusion each consist of the abrasive material paired with another, more abrasion-resistant material.

8. Dental prosthesis according to claim 7, **characterized in that** the more abrasion-resistant material is harder than the first abrasive material.

9. Dental prosthesis according to claim 7 or 8, **characterized in that** the denture teeth (8, 10) of the upper jaw (1) or the denture teeth (8, 10) of the lower jaw (2) are made of the abrasive material.

## Revendications

1. Prothèse dentaire temporaire destinée à déterminer des facettes d'abrasion, présentant une base de prothèse (4, 6) et au moins une dent prothétique (8, 10), chez laquelle au moins la surface occlusale (12) de la dent prothétique (8, 10) ou d'au moins une des dents prothétiques (8, 10) est fabriquée à base d'un matériau pouvant être abrasé, **caractérisée en ce que**
le matériau pouvant être abrasé présente un Plexiglas, un polyméthacrylate de méthyle non réticulé, et/ou un thermoplastique non chargé et non réticulé, et que
le matériau pouvant être abrasé est façonné de telle manière que, sur une surface plane du matériau pouvant être abrasé, lors d'une abrasion à deux milieux contre une sphère d'oxyde d'aluminium de 4,75 mm de diamètre, sous l'eau, après 4600 cycles, il se produit une perte de volume de 0,1 mm³ à 2 mm³, dans laquelle, à chaque cycle, la sphère d'oxyde d'aluminium est posée sur la surface, ensuite, est roulée avec une force de 50 N sur 0,8 mm sur la surface plane du matériau et, ensuite, est de nouveau enlevée de la surface.

2. Prothèse dentaire selon la revendication 1, **caractérisée en ce que** les pertes de volume décrites par l'abrasion à deux milieux ont lieu dans un simulateur de mastication CS-4.2 de la société SD Mechatronik GmbH.

3. Prothèse dentaire selon l'une des revendications précédentes, **caractérisée en ce que** la prothèse dentaire temporaire est fabriquée avec un procédé de prototypage rapide ou avec un procédé par abrasion.

4. Prothèse dentaire selon l'une des revendications précédentes, **caractérisée en ce que** la prothèse dentaire provisoire est fabriquée avec l'un des procédés suivants :
Fused Layer Modeling/Manufacturing (FLM) de matières synthétiques ou de cires, Fused Deposition Modeling (FDM) de matières synthétiques ou de cires, en particulier, de produits de copolymérisation acrylonitrile-butadiène-styrène ou de polylactide, Laminated Object Modelling (LOM) de films de matières synthétiques, Layer Laminated Manufacturing (LLM) de films de matières synthétiques, la fusion par faisceaux d'électrons (EBM) de matières synthétiques ou de cires, Multi Jet Modeling (MJM) de cires ou de matières synthétiques, en particulier, de thermoplastiques ou de photopolymères sensibles aux UV, la fusion de polyamide de polyamides, la fusion laser sélective (SLS) de matières synthétiques, le frittage laser sélectif (SLS) de matières synthétiques ou de cires, en particulier, de thermoplastiques comme les polycarbonates, les polyamides ou les chlorures de polyvinyle, l'impression 3D (3DP) de granulés de matière synthétique ou de poudre de matière synthétique, Space Puzzle Molding (SPM) de matières synthétiques ou de cires, la stéréolithographie (STL ou SLA) de matières synthétiques ou de cires, l'érodage ou les procédés de fraisage multiaxes, en particulier d'une résine liquide, d'un duromère ou d'un élastomère, ou Digital Light Processing (DLP) de matières synthétiques liquides photopolymérisables.

5. Prothèse dentaire selon l'une des revendications précédentes, **caractérisée en ce que** le matériau pouvant être abrasé est biocompatible.

6. Prothèse dentaire selon l'une des revendications précédentes, **caractérisée en ce que** la surface occlusale (12) ou les surfaces occlusales (12), l'extrémité coronale ou les extrémités coronales, les dents prothétiques (8, 10) ou les rangées de dents prothétiques, la prothèse dentaire de la mâchoire supérieure (1), ou la prothèse dentaire de la mâchoire inférieure (2), ou la prothèse dentaire temporaire complète sont fabriquées à partir du matériau pouvant être abrasé.

7. Prothèse dentaire selon l'une des revendications précédentes, **caractérisée en ce que** les surfaces occlusales (12) des dents prothétiques (8, 10) se trouvant en occlusion sont constituées respectivement à base du matériau pouvant être abrasé combiné avec un autre matériau davantage résistant à l'abrasion.

8. Prothèse dentaire selon la revendication 7, **caractérisée en ce que**
le matériau résistant davantage à l'abrasion est plus dur que le premier matériau.

9. Prothèse dentaire selon la revendication 7 ou la revendication 8, **caractérisée en ce que** les dents prothétiques (8, 10) de la mâchoire supérieure (1) ou les dents prothétiques (8, 10) de la mâchoire inférieure (2) sont fabriquées à base du matériau pouvant être abrasé.
